# FASCICULE DE BREVET EUROPEEN

(11) **EP 2 652 185 B1**
(45) Date de publication et mention de la délivrance du brevet: **24.06.2015**
(21) Numéro de dépôt: 11805095.4
(22) Date de dépôt: 05.12.2011
(51) Int. Cl.: B29B 11/16, B29C 70/22, B64D 27/26, B64D 27/00, F01D 25/24, D03D 11/02, D03D 25/00

(54) **STRUCTURE FIBREUSE POUR PIECE EN MATERIAU COMPOSITE AYANT UNE OU PLUSIEURS PARTIES EN FORME D'ARCHE**
FASERGEBILDE FÜR EIN VERBUNDMATERIALTEIL MIT EINEM ODER MEHREREN BOGENFÖRMIGEN TEILEN
FIBROUS STRUCTURE FOR A PART MADE OF COMPOSITE MATERIAL HAVING ONE OR MORE ARCH-SHAPED PORTIONS

(30) Priorité: 13.12.2010 FR 1060408
(43) Date de publication de la demande: 23.10.2013
(73) Titulaire: Snecma, 75015 Paris (FR)
(72) Inventeur: GODON, Thierry, 93270 Sevran (FR); DAMBRINE, Bruno, Jacques, Gérard, 77820 Le Châtelet-en-Brie (FR)
(74) Mandataire: Desormiere, Pierre-Louis
(86) Numéro de dépôt international: PCT/FR2011/052868
(87) Numéro de publication internationale: WO 2012/080617

(56) Documents cités:
- EP-A1- 0 391 745
- FR-A1- 2 939 129
- FR-A1- 2 940 167
- JP-A- 5 230 735
- US-A- 5 098 756
- US-B2- 6 955 192

## Description

### Arrière-plan de l'invention

La présente invention concerne la réalisation de pièces en matériau composite et plus particulièrement la réalisation de structures fibreuses de renfort pour de telles pièces.

Un domaine d'application de l'invention est plus particulièrement la réalisation de pièces en matériau composite structural, c'est-à-dire des pièces de structure à renfort fibreux et densifié par une matrice. Les matériaux composites permettent de réaliser des pièces ayant une masse globale moins élevée que ces mêmes pièces lorsqu'elles sont réalisées en matériau métallique.

Les pièces de géométrie standards réalisées en matériau composite présentent généralement un bon caractère structural et une résistance mécanique élevée en raison notamment du fait que, dans la plupart des cas, le renfort fibreux de la pièce est réalisé en une seule pièce et permet ainsi une bonne répartition des efforts mécaniques exercés sur toute partie de la pièce.

En revanche, la réalisation en matériau composite de pièces de géométries plus complexes, et en particulier celles comportant un ou plusieurs éléments destinés à supporter l'ensemble de la pièce, ne permet pas en général d'offrir une résistance mécanique élevée sur l'ensemble de la pièce.

En effet, dans le cas par exemple de la réalisation en matériau composite d'un carter de moteur d'avion muni d'une ou plusieurs chapes de suspension pour l'accrochage du moteur sur l'aile de l'avion, le renfort fibreux de la ou des chapes de suspension est fabriqué indépendamment du renfort fibreux de la virole du carter et est rapportés ensuite sur celui-ci, par exemple par couture ou collage. En raison des sollicitations mécaniques très importantes (plusieurs milliers de tonnes) qui s'exercent au niveau des chapes qui supportent le moteur, une telle conception de carter ne peut offrir une résistance mécanique suffisante. Ce type de pièce est, par conséquent, aujourd'hui toujours fabriqué en matériau métallique et présentent, par conséquent, une masse globale relativement élevée.

Une pièce en matériau composite selon le préambule de la revendication 1 est connue de EP0391745 A1.

### Objet et résumé de l'invention

Il est donc souhaitable de pouvoir disposer de pièces de géométries complexes présentant une masse globale réduite tout en ayant les propriétés mécaniques requises.

A cet effet, selon l'invention, il est proposé une pièce en matériau composite comprenant un renfort fibreux densifié par une matrice, la pièce comportant au moins un élément en forme d'arche, ledit renfort étant constitué par une structure fibreuse de renfort de pièce en matériau composite, ladite structure étant tissée en une seule pièce par tissage multicouche entre une pluralité de couches de fils de chaîne disposées de façon adjacente entre deux faces de ladite structure et une pluralité de couches de fils de trame,
caractérisée en ce que la structure fibreuse comprend au moins une portion en forme d'arche s'étendant au-dessus d'une des faces de ladite structure fibreuse, la portion en forme d'arche comprenant au moins une partie des fils de chaîne continus d'au moins deux couches adjacentes de fils de chaîne présentes sur une des faces de la structure, les fils de chaîne de ladite portion en forme d'arche ayant une longueur supérieure aux fils de chaîne d'au moins les deux couches de fils de chaîne sous-jacentes de ladite structure et en ce que lesdits fils de chaîne de ladite portion en forme d'arche sont déliés des autres fils de chaîne de la structure fibreuse.

Ainsi, il est possible de former des pièces en matériau composite comprenant des éléments de suspension ou d'accrochage formés à partir de la ou des portions en forme d'arche. La ou les portions en forme d'arche étant tissées à partir de fils de chaîne continus avec le reste de la structure fibreuse, les efforts exercés au niveau des éléments de suspension ou d'accrochage de la pièce peuvent être repris par l'ensemble de la structure de cette dernière.

Selon des modes de réalisation de l'invention, la structure fibreuse comprend plusieurs portions en forme d'arche disposées de façon adjacente dans le sens trame et/ou plusieurs portions en forme d'arche décalées les une des autres dans le sens chaîne, et ce sur l'une ou les deux faces de ladite structure fibreuse.

Selon une caractéristique de l'invention, la structure fibreuse présente une forme de bande s'étendant suivant une longueur déterminée en sens chaîne et présentant une largeur déterminée en sens trame, chaque portion en forme d'arche s'étendant sur une longueur en sens trame inférieure à la longueur de la structure fibreuse et présentant une largeur en sens trame inférieure à la largeur de ladite structure. Selon une variante de réalisation, la ou les portions en forme d'arche peuvent présenter une largeur en sens trame égale à la largeur de la bande de la structure fibreuse.

Selon un aspect de l'invention, chaque portion en forme d'arche présente une contexture en sens chaîne sensiblement identique à celle de la portion de la structure fibreuse située en dessous de la portion en forme d'arche.

Selon un autre aspect de l'invention, chaque portion en forme d'arche présente une contexture en sens chaîne plus faible que celle de la portion de la structure fibreuse située en dessous de la portion en forme d'arche.

Selon encore un autre aspect de l'invention, chaque portion en forme d'arche peut comprendre des fils de trame ayant un titre plus important que les fils de trames de la portion de la structure fibreuse située en dessous de la portion en forme d'arche.

La pièce en matériau composite selon l'invention peut notamment constituer un carter de moteur aéronautique comprenant au moins une chape de suspension.

L'invention a également pour objet un turbopropulseur équipé d'un carter de moteur selon l'invention.

L'invention vise encore un aéronef équipé d'au moins un turbopropulseur selon l'invention.

### Brève description des dessins

D'autres caractéristiques et avantages de l'invention ressortiront de la description suivante de modes particuliers de réalisation de l'invention, donnés à titre d'exemples non limitatifs, en référence aux dessins annexés, sur lesquels :
- la figure 1 est une vue en perspective d'un carter de moteur aéronautique conformément à un mode de réalisation de l'invention,
- la figure 2 est une vue schématique en perspective d'une structure fibreuse pour la fabrication d'un carter de moteur aéronautique de la figure 1,
- les figures 3A à 3D sont des vues en coupe trame à échelle agrandie montrant un exemple de disposition de fils de trame dans une partie de l'ébauche fibreuse de la figure 1 ne comprenant pas la portion en forme d'arche,
- les figures 3E à 3H sont des vues en coupe trame à échelle agrandie montrant plusieurs plans successifs d'armure dans une partie de l'ébauche fibreuse de la figure 1 comprenant la portion en forme d'arche,
- les figures 3I à 3L sont des vues en coupe chaîne à échelle agrandie montrant plusieurs plans successifs d'armure dans une partie de l'ébauche fibreuse de la figure 1 comprenant la portion en forme d'arche,
- la figure 4 montre la mise en forme de la structure fibreuse de la figure 2 en vue de sa densification;
- les figures 5A à 5D sont des vues en coupe trame à échelle agrandie montrant plusieurs plans successifs d'armure dans une partie d'ébauche fibreuse ne comprenant pas de portion en forme d'arche,
- les figures 5E à 5H sont des vues en coupe trame à échelle agrandie montrant plusieurs plans successifs d'armure dans une partie d'ébauche fibreuse comprenant une portion en forme d'arche,
- la figure 6 est une vue en perspective d'un autre mode de réalisation d'un carter de moteur aéronautique selon l'invention,
- la figure 7 est une vue en perspective d'un mode de réalisation d'une porte munie de charnière selon l'invention,
- la figure 8 est une vue en perspective d'un mode de réalisation d'une portion de virole munie d'une cloison interne selon l'invention,
- la figure 9 est une vue en perspective d'un mode de réalisation d'une portion de virole munie d'une cloison interne et d'une cloison externe selon l'invention,
- la figure 10 est une vue en perspective d'un autre mode de réalisation d'un carter de moteur aéronautique selon l'invention.

### Description détaillée de modes de réalisation

L'invention s'applique d'une manière générale à la réalisation de structures fibreuses aptes à constituer des renforts fibreux, ou préformes, pour la fabrication de pièces en matériau composite comprenant au moins un élément en forme d'arche.

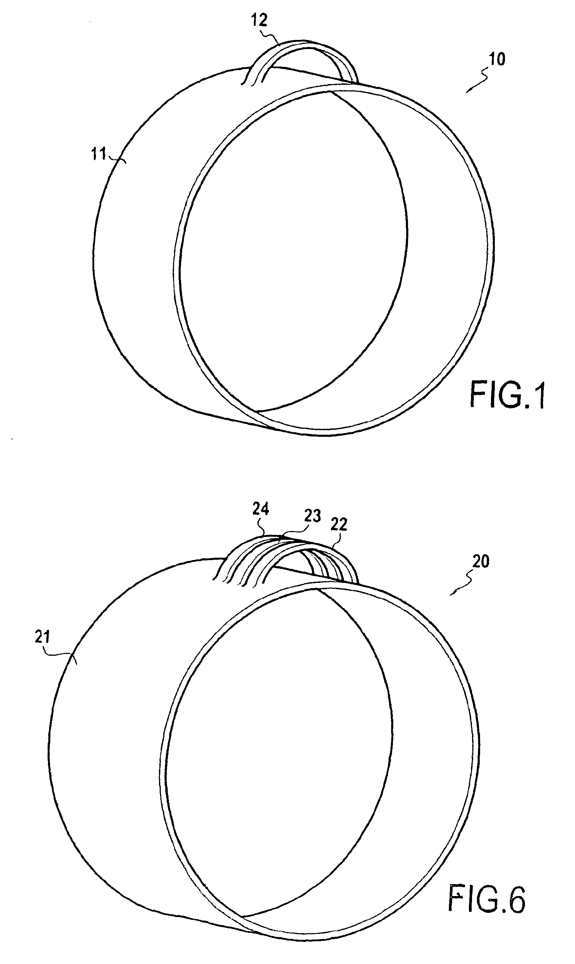

Conformément à l'invention, la partie de la structure fibreuse destinée à former l'élément en forme d'arche est formée intégralement avec le reste de la structure fibreuse. Plus précisément et comme expliqué en détails ci-après, la partie destinée à former l'élément en forme d'arche est tissée à partir de fils de chaîne continus avec le reste de la structure. Ainsi, les efforts exercés au niveau de l'élément en forme d'arche peuvent être repris par l'ensemble de la structure fibreuse constituant le renfort de la pièce en matériau composite.La figure 1 illustre un carter 10 d'un moteur d'avion en matériau composite formée d'une virole 11 comprenant une chape de suspension 12 destinée à permettre l'accrochage du moteur sur un pylône d'aile d'avion (non représenté sur la figure 1).

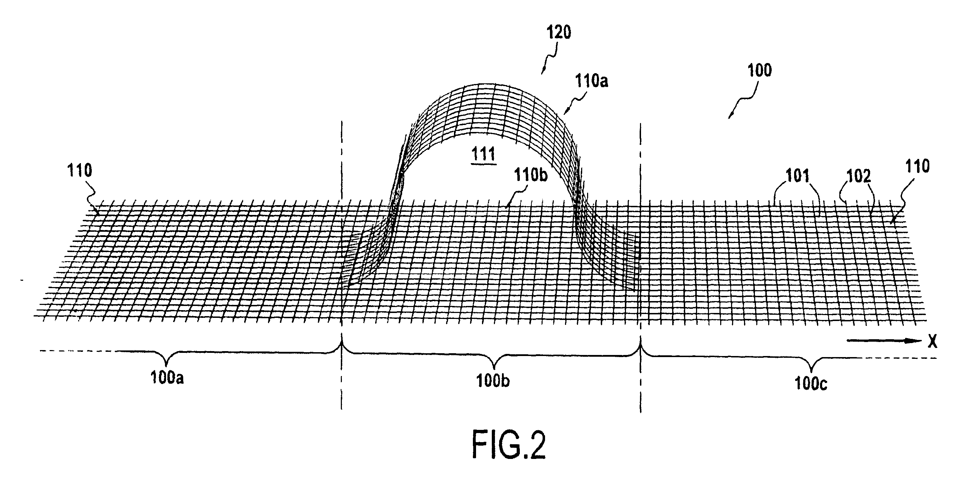

La figure 2 montre très schématiquement une ébauche fibreuse 100 destinée à former la préforme fibreuse du carter 10.

L'ébauche fibreuse 100 est obtenue, comme illustrée schématiquement sur la figure 2, par tissage multicouche réalisé de façon connue au moyen d'un métier à tisser de type jacquard sur lequel on a disposé un faisceau de fils de chaînes 101 ou torons en une pluralité de couches, les fils de chaînes étant liés par des fils de trame 102.

Dans l'exemple illustré, le tissage multicouche est un tissage à armure "interlock". Par tissage "interlock", on entend ici une armure de tissage dans laquelle chaque couche de fils de trame lie plusieurs couches de fils de chaîne avec tous les fils d'une même colonne de trame ayant le même mouvement dans le plan de l'armure.

D'autres types de tissage multicouche connus pourront être utilisés, comme notamment ceux décrits dans le document WO 2006/136755.

L'ébauche fibreuse selon l'invention peut être tissée notamment, mais non exclusivement, à partir de fils de fibres de carbone, de céramique tel que du carbure de silicium, ou encore de métal tel que du titane.

Comme illustrée sur la figure 2, l'ébauche fibreuse 100 présente une forme de bande 110 s'étendant en longueur suivant une direction X, la bande étant destinée à former, après mise en forme de l'ébauche, la virole 11 du carter 10, une portion 120 en forme d'arche destinée à former la chape de suspension 12 étant présente sur l'ébauche fibreuse.

Dans des parties 100a et 100c de l'ébauche fibreuse 100 situées de part et d'autre de la partie 100b comprenant la portion 120, toutes les couches de fils de chaîne comprennent des fils de chaîne de même longueur et chacune des couches de fils de chaîne est liée au moins à la ou les couches de fils de chaîne adjacentes par des fils de trames de manière à obtenir dans les parties 100a et 100c de l'ébauche une structure où toutes les couches de fils de chaînes sont liées.

Dans la partie 100b, la bande 110 est divisée en deux sous-bandes 110a et 110b par une zone de déliaison 111 formée entre un premier groupe de couches de fils de chaîne 101a et un deuxième groupe de fils de chaîne 101b. La sous-bande 110a est formée par au moins deux couches de fils de chaînes adjacentes ou successives à partir de la première couche de fils de chaîne présente sur une face de l'ébauche fibreuse 100, ici la face supérieure tandis que la sous-bande 110b est formée par les couches de fils de chaîne sous-jacentes à celles de la sous-bande 110a. Conformément à l'invention, les fils de chaîne de la sous-bande 110a présentent une longueur supérieure à celle des fils des couches de fils de chaîne sous-jacentes de la sous-bande 110b. Cette différence de longueur peut être obtenue en appliquant aux fils de chaîne des couches de fils de chaîne de la sous-bande 110a une vitesse d'appel supérieure à la vitesse d'appel des fils de chaîne des couches de fils de chaîne de la sous-bande 110b. Selon une variante de réalisation, la longueur des fils de chaîne des couches de fils de chaîne de la sous-bande 110a peut être augmentée par rapport à celle des fils de chaîne de la sous-bande 110b en tirant sur les fils de chaîne des couches de fils de chaîne de la sous-bande 110a.

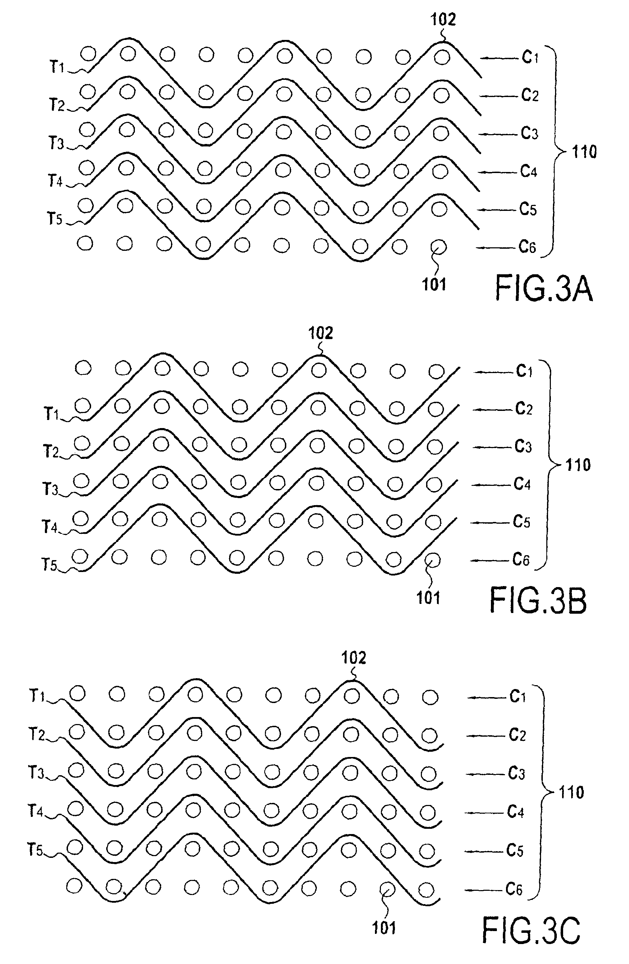

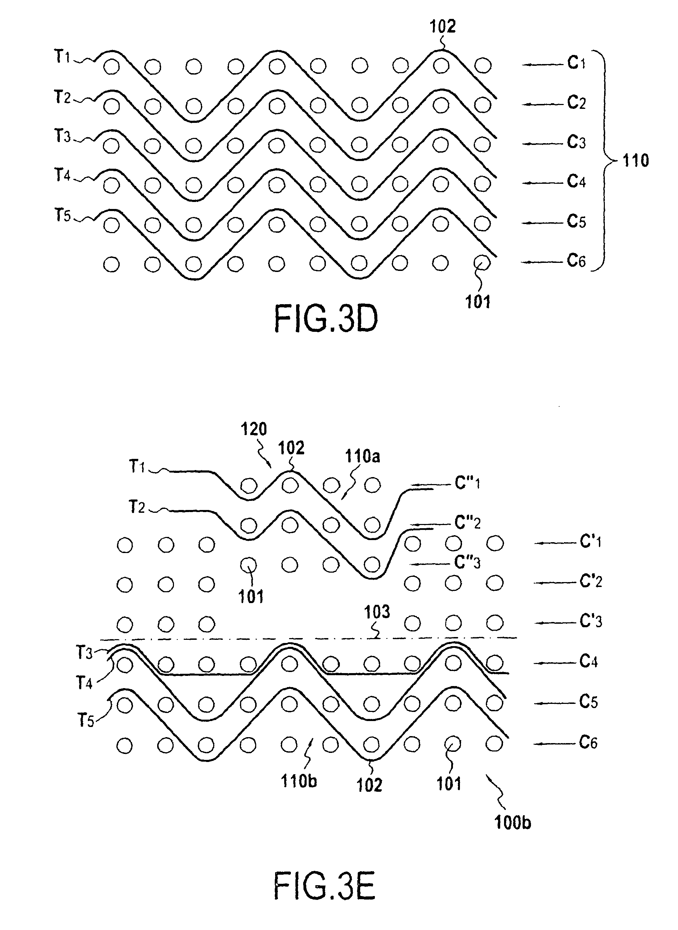

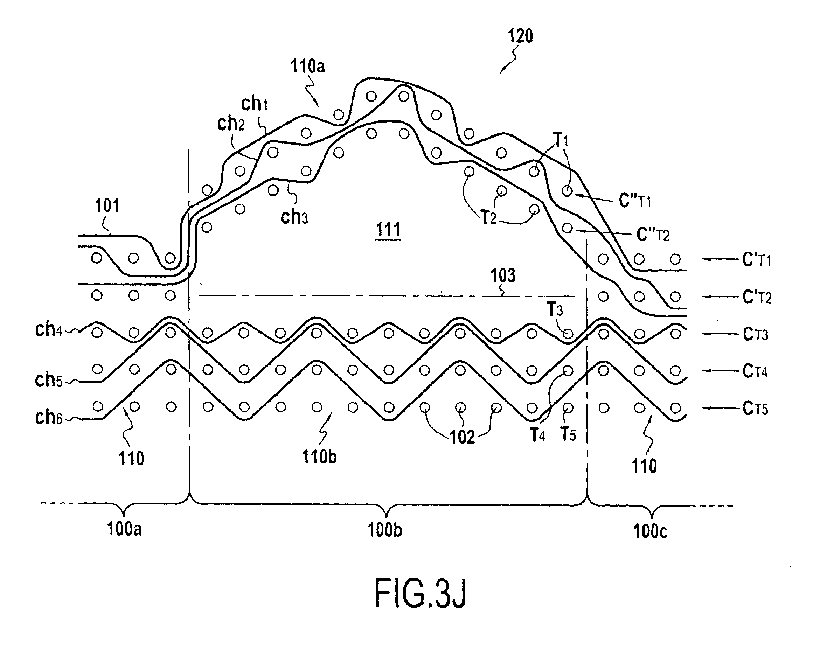

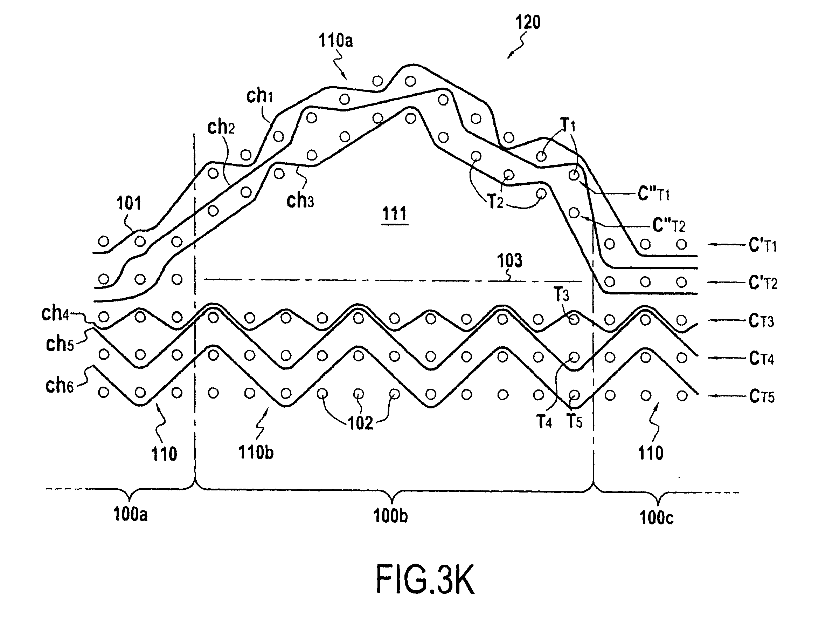

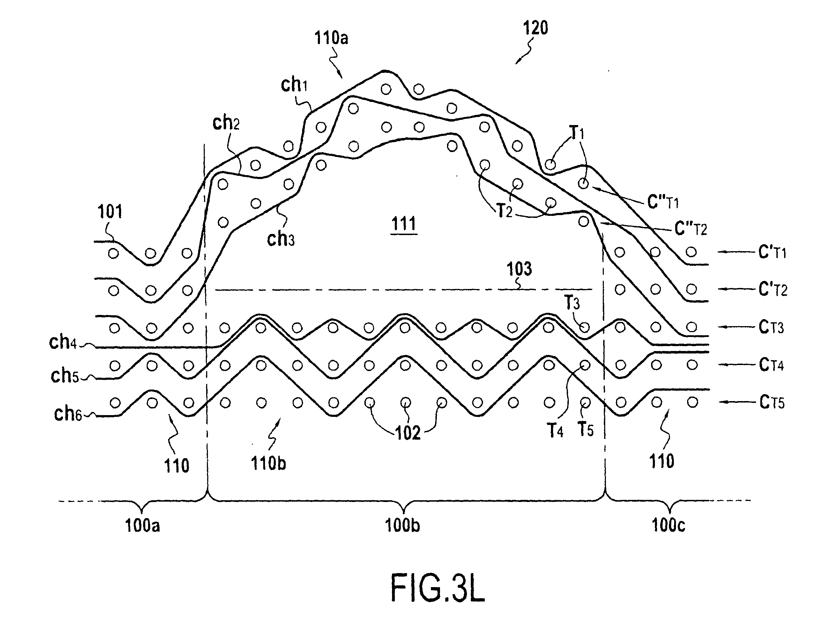

Un mode de tissage multicouche à armure interlock des parties 100a ou 100c de l'ébauche 100 est montré schématiquement par les figures 3A à 3D qui sont respectivement des vues partielles agrandies de plans en coupe chaîne successifs. Dans cet exemple, l'ébauche 100 comprend 6 couches de fils de chaîne 101 s'étendant dans la direction X. Sur les figures 3A à 3D, les 6 couches de fils de chaîne C₁ à C₆ sont liés par des fils de trame T₁ à T₅. Par souci de simplification, seuls 6 couches de fils de chaîne et 5 couches de fils de trame sont représentés ici, bien entendu suivant les dimensions (largeur et épaisseur) de la structure fibreuse que l'on souhaite obtenir, cette dernière pourra être réalisée avec un nombre de couches de fils de chaîne et de trame ainsi qu'un nombre de fils par couche beaucoup plus importants.

Les figures 3E à 3H sont respectivement des vues partielles agrandies de plans en coupe chaîne successifs d'une armure de la partie 100b de l'ébauche 100 comprenant la sous-bande 110a correspondant à la portion 120 et la sous-bande 110b. Dans la partie 100b, les fils de trame T₃ ne lient pas entre elles les couches de fils de chaîne C₃ et C₄ de sorte que l'ébauche 100 présente une déliaison 103 entre les sous-bandes 110a et 110b formant la zone de déliaison 111. Les figures 3E à 3H correspondent à des plans d'armure successifs situés dans la partie montante de la portion en forme d'arche 120.

Sur la figure 3E, des couches C"₁, C"₂ et C"₃ correspondant respectivement à une portion des fils de chaîne des trois couches de fils de chaîne C₁, C₂ et C₃ et destinés à former la portion en forme d'arche 120 sont liées entre elles par les fils de trame T₁ et T₂ tandis que les couches C'₁, C'₂ et C'₃ correspondant aux fils de chaîne restant des trois couches de fils de chaîne Ci, C₂ et C₃ ne sont pas tissés. Les trois couches de fils de chaîne sous-jacentes C₄, C₅ et C₆ sont liées entre elles par les fils de trame T₃, T₄ et T₅.

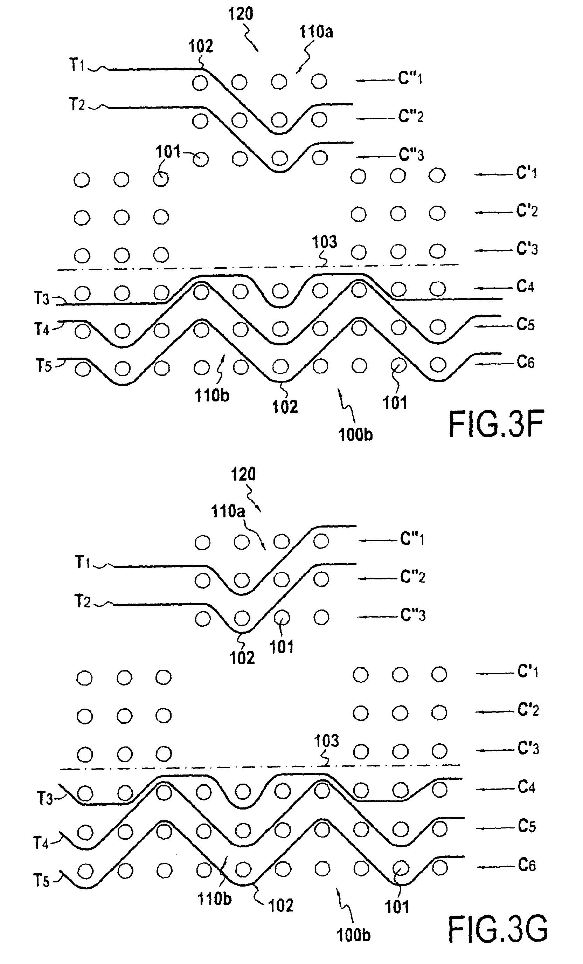

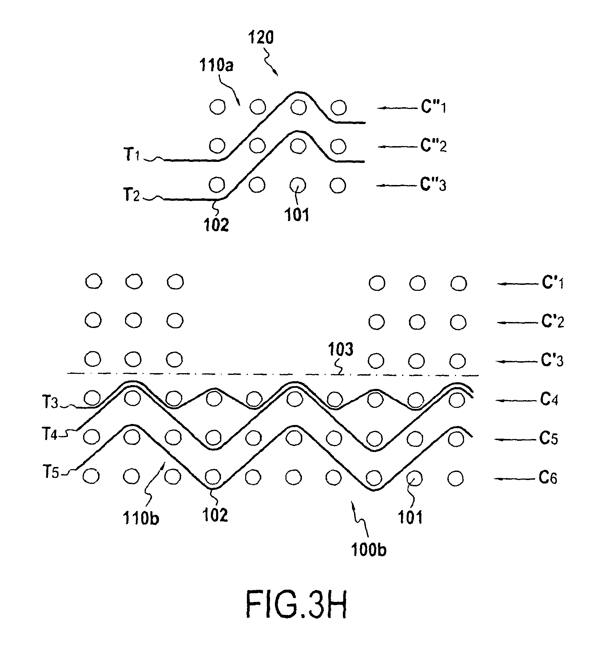

Les figures 3F, 3G et 3H montrent respectivement les trois plans d'armure successifs qui sont réalisés à la suite du plan d'armure de la figure 3E. Les plans d'armures des figures 3E à 3H sont répétés sur toute la longueur de la portion 120.

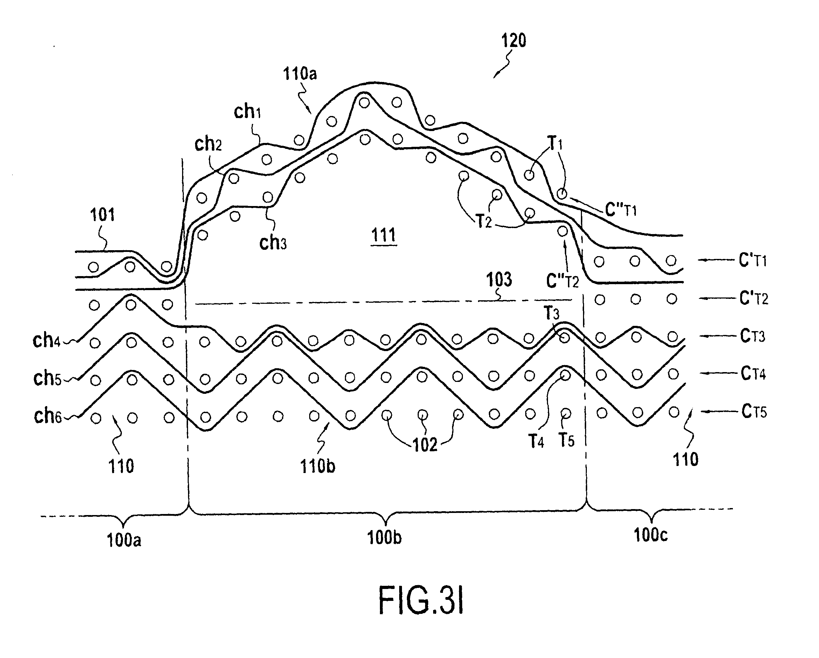

Les figures 3I à 3L sont respectivement des vues partielles agrandies de plans en coupe trame successifs d'une armure de l'ébauche 100 comprenant la partie 100b. Dans la partie 100b, les fils de trame des deux couches de fils de trame C"_{T1} et C"_{T2} et appartenant à la sous-bande 110a sont tissés avec les fils de chaîne ch₁, ch₂ et ch₃ des couches de fils de chaîne C"₁, C"₂ et C"₃ (figures 3E à 3H) tandis que les autres fils de trame des couches de fils de trame sous-jacentes CT₃, CT₄ et CT₅ et appartenant à la sous-bande 110b sont tissés avec les fils de chaîne ch₄, ch5 et ch6 des couches de fils de chaîne C₄, C₅ et C₆ (figures 3E à 3H).

Comme illustré sur les figures 3I à 3L, dans la partie 100b, le nombre de fils de trame T₁ et T₂ présents respectivement dans les couches C"_{T1} et C"_{T2} est plus important que le nombre de fils de trame T₃, T₄ et T₅ présents respectivement dans les couches C_{T3}, C_{T4} et C_{T5}. Cela permet de maintenir une contexture constante dans la sous-bande 110a par rapport à la sous bande 110b et au reste de l'ébauche 100, c'est-à-dire le nombre de fils de trame par unité de longueur en sens chaîne constant entre les deux sous-bandes 110a et 110b, et ce malgré la longueur supérieure des fils de chaîne dans la sous-bande 110a. Si l'on insert le même nombre de fils de trame dans les sous-bandes 110a et 110b, le pas entre deux fils de trame adjacents dans le sens chaîne dans la bande 110a peut être réduit en insérant des fils de trame ayant un titre plus important que les fils de trame insérés dans la sous bande 110b.

La contexture dans la sous-bande 110a peut être également plus faible (ou lâche) que dans la sous-bande 110b, c'est-à-dire que le nombre de fils de trame par unité de longueur dans le sens chaîne est moins grand dans la sous-bande 110a que dans la sous-bande 110b.

A la fin du tissage, les fils de chaînes non tissés, à savoir ici les fils de chaîne des couches C'₁, C'₂ et C'₃ (figures 3E à 3H), ainsi que les fils de trame non tissés, à savoir les parties des fils de trame T₁ et T₂ situées en dehors des couches C"₁, C"₂ et C"₃ sont découpés pour extraire l'ébauche 100 représentée sur la figure 2 telle qu'elle est issue du tissage multicouche et avant toute conformation. Selon une variante de réalisation, la portion en forme d'arche peut être également découpée au jet d'eau afin, par exemple, de réduire son épaisseur et/ou de modifier son profil en largeur dans le sens trame.

La sur-longueur des fils de chaîne de la sous-bande 110a dans la partie 100b et la zone de déliaison 111 ménagée lors du tissage entre les sous-bandes 110a et 110b permettent de former la portion en forme d'arche 120.

La portion en forme d'arche de la structure fibreuse de l'invention est constituée de plusieurs couches de fils de chaînes liées entre elles. Cette portion délimite par rapport au reste de la bande sous-jacente une cavité qui sera conservée dans la pièce finale, c'est-à-dire après densification de la texture par la matrice.

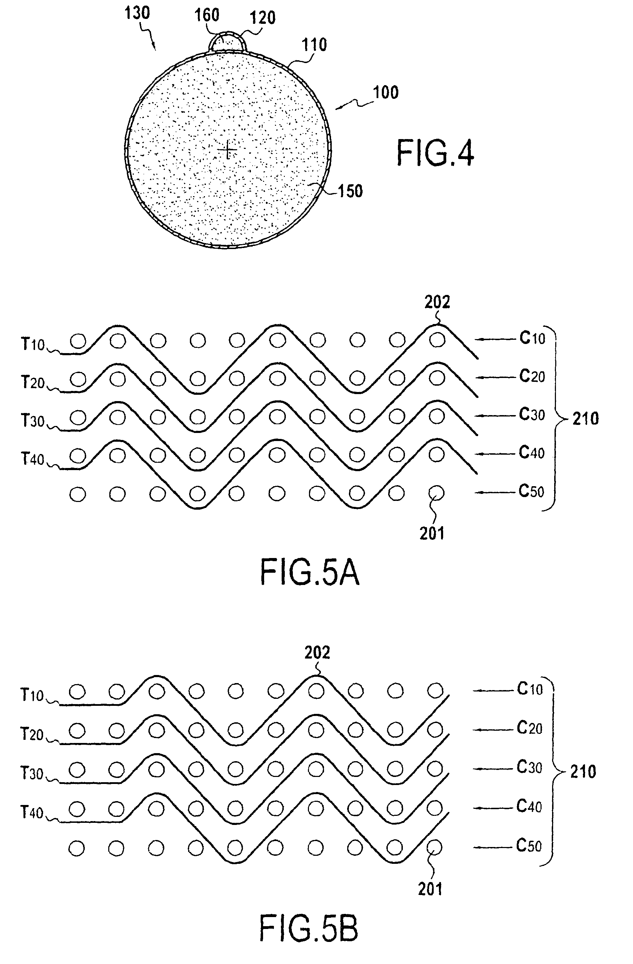

On procède ensuite à la densification de l'ébauche fibreuse pour former le carter 10 de la figure 1. A cet effet, comme illustrée sur la figure 4, l'ébauche fibreuse 100 est mise en forme autour d'un mandrin 150 les deux extrémités libres de l'ébauche 100 peuvent être, par exemple, cousues ensembles avant densification ou simplement superposées, ces dernières étant liées entre elles lors de la densification. On obtient ainsi une préforme fibreuse 130 prête à être densifiée. Un insert 160 correspondant à la forme intérieure de la portion en forme d'arche 120 est en outre placé sous cette dernière afin de maintenir la portion en forme d'arche dans forme durant la densification et d'empêcher la formation d'une matrice dans le volume présent entre la portion 120 et la bande inférieure de l'ébauche. Dans des variantes de réalisation, l'ébauche fibreuse présente une longueur correspondant à plusieurs fois la circonférence du carter, la portion en forme d'arche pouvant être située sur la partie de l'ébauche disposée sur le mandrin lors du dernier tour ou, à l'inverse, dans le ou les premiers tours, des ouvertures permettant le passage de l'arche à travers les tours suivants étant alors ménagées dans l'ébauche.

La densification de la préforme fibreuse consiste à combler la porosité de la préforme, dans tout ou partie du volume de celle-ci, par le matériau constitutif de la matrice.

La matrice du matériau composite constituant la structure à profil aérodynamique peut être obtenue de façon connue en soi suivant le procédé par voie liquide.

Le procédé par voie liquide consiste à imprégner la préforme par une composition liquide contenant un précurseur organique du matériau de la matrice. Le précurseur organique se présente habituellement sous forme d'un polymère, tel qu'une résine, éventuellement dilué dans un solvant. La préforme est placée dans un moule pouvant être fermé de manière étanche avec un logement ayant la forme de la pièce finale moulée. Ici, la préforme est placée entre un moule et un contre-moule présentant respectivement la forme extérieure et la forme intérieure (comme le mandrin 150) du carter à réaliser. Ensuite, on referme le moule et on injecte le précurseur liquide de matrice (par exemple une résine) dans tout le logement pour imprégner toute la partie fibreuse de la préforme.

La transformation du précurseur en matrice organique, à savoir sa polymérisation, est réalisée par traitement thermique, généralement par chauffage du moule, après élimination du solvant éventuel et réticulation du polymère, la préforme étant toujours maintenue dans le moule ayant une forme correspondant à celle de la pièce à réaliser. La matrice organique peut être notamment obtenue à partir de résines époxydes, telle que, par exemple, la résine époxyde à hautes performances vendue, ou de précurseurs liquides de matrices carbone ou céramique.

Dans le cas de la formation d'une matrice carbone ou céramique, le traitement thermique consiste à pyrolyser le précurseur organique pour transformer la matrice organique en une matrice carbone ou céramique selon le précurseur utilisé et les conditions de pyrolyse. A titre d'exemple, des précurseurs liquides de carbone peuvent être des résines à taux de coke relativement élevé, telles que des résines phénoliques, tandis que des précurseurs liquides de céramique, notamment de SiC, peuvent être des résines de type polycarbosilane (PCS) ou polytitanocarbosilane (PTCS) ou polysilazane (PSZ). Plusieurs cycles consécutifs, depuis l'imprégnation jusqu'au traitement thermique, peuvent être réalisés pour parvenir au degré de densification souhaité.

Selon un aspect de l'invention, la densification de la préforme fibreuse peut être réalisée par le procédé bien connu de moulage par transfert dit RTM ("Resin Transfert Moulding"). Conformément au procédé RTM, on place la préforme fibreuse 130 avec le mandrin 150 et l'insert 160 (figure 4) dans un moule présentant la forme extérieure du carter à réaliser. Une résine thermodurcissable est injectée dans l'espace interne délimité entre la pièce en matériau rigide et le moule et qui comprend la préforme fibreuse. Un gradient de pression est généralement établi dans cet espace interne entre l'endroit où est injecté la résine et les orifices d'évacuation de cette dernière afin de contrôler et d'optimiser l'imprégnation de la préforme par la résine.

La résine utilisée peut être, par exemple, une résine époxyde. Les résines adaptées pour les procédés RTM sont bien connues. Elles présentent de préférence une faible viscosité pour faciliter leur injection dans les fibres. Le choix de la classe de température et/ou la nature chimique de la résine est déterminé en fonction des sollicitations thermomécaniques auxquelles doit être soumise la pièce. Une fois la résine injectée dans tout le renfort, on procède à sa polymérisation par traitement thermique conformément au procédé RTM.

Après l'injection et la polymérisation, la pièce est démoulée. Au final, la pièce est détourée pour enlever l'excès de résine et les chanfreins sont usinés pour obtenir le carter 10 de la figure 1.

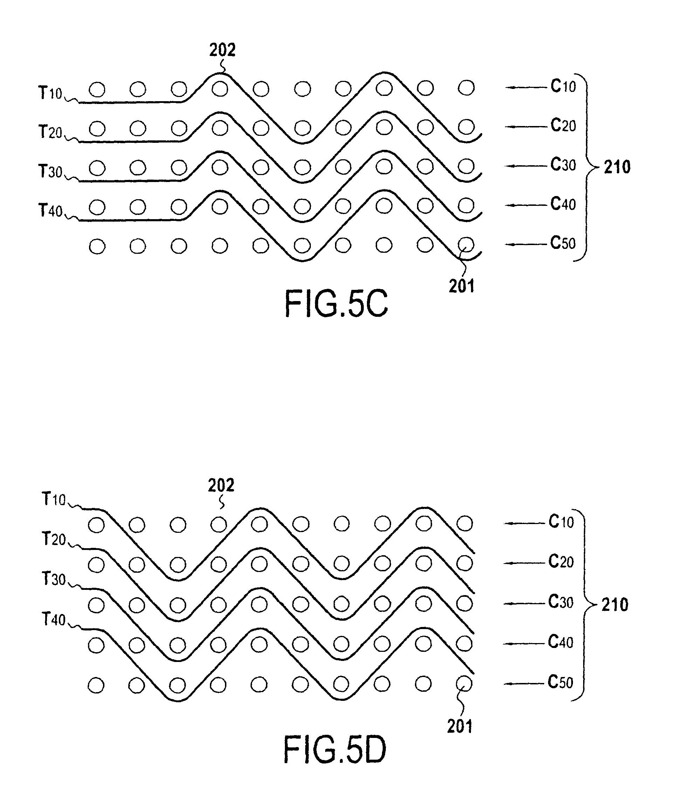

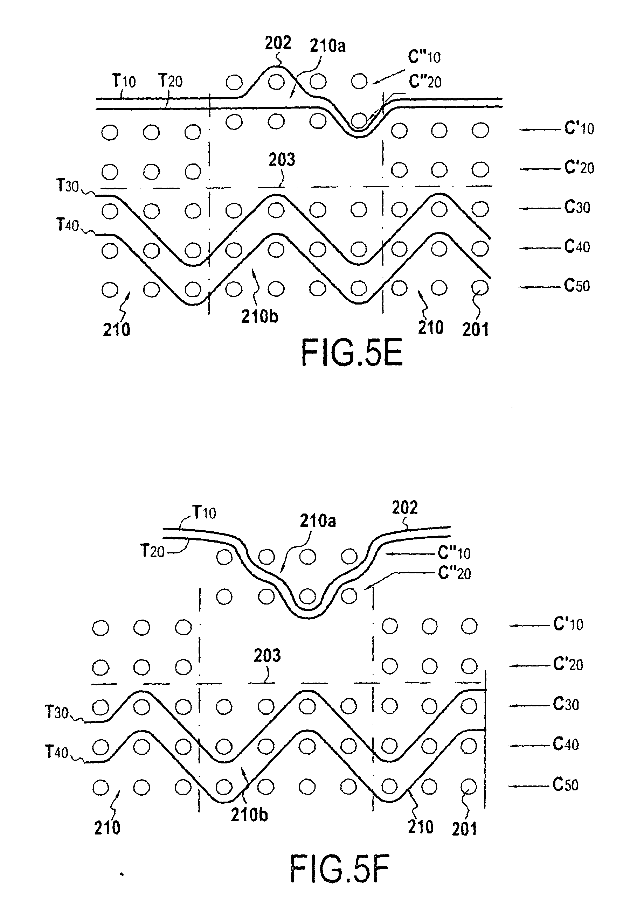

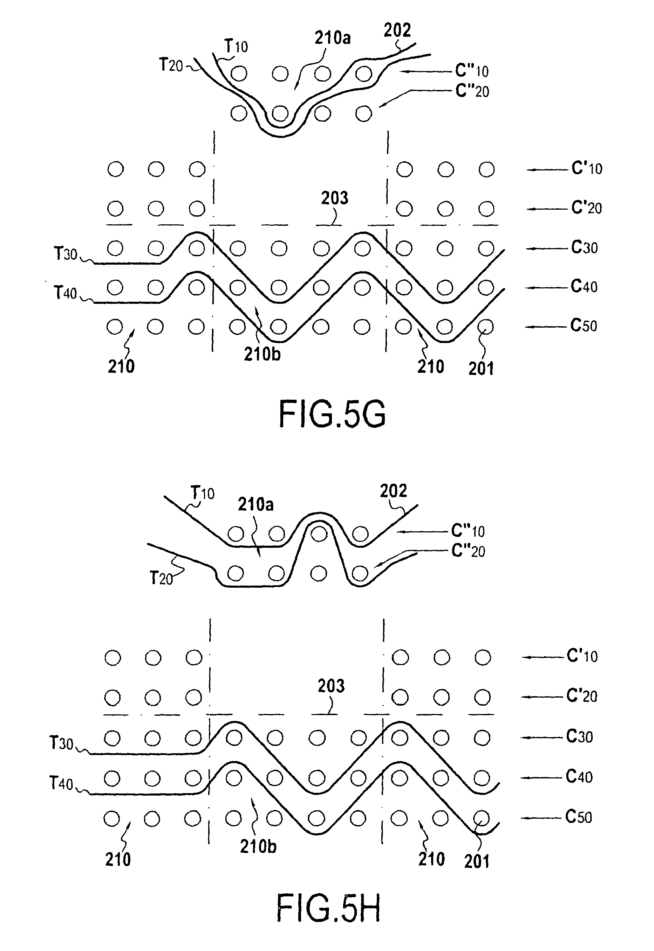

Les figures 5A à 5H montrent schématiquement des vues partielles agrandies de plans en coupe chaîne successifs d'une variante de mode de tissage multicouche à armure interlock d'une ébauche 200 destinée à former un carter de moteur d'avion similaire au carter 10 de la figure 1, à savoir présentant une virole munie d'une chape de suspension intégrée en forme d'arche. Ce mode de tissage diffère de celui des figures 3A à 3H en ce qu'on utilise seulement 2 couches de fils de chaîne pour former une portion en forme d'arche 220. Dans cet exemple, l'ébauche 200 comprend 5 couches C₁₀ à C₅₀ de fils de chaîne 201 qui, sur les figures 5A à 5D, sont liées entre elles par des fils de trame 201 référencés T₁₀ à T₄₀, l'ébauche formant une bande 210. Sur les figures 5E à 5H, correspondant à la partie de l'ébauche fibreuse où la portion en forme d'arche 220 de l'ébauche fibreuse est formée, les fils de trame T₂₀ ne lient pas entre elles les couches de fils de chaîne C₂₀ et C₃₀ de sorte que l'ébauche 200 présente une déliaison 203 séparant deux sous-bandes 210a et 210b. La sous-bande 210a correspondant à la portion en forme d'arche 220 de l'ébauche 200 comprend des fils de chaîne d'une longueur supérieure à celle des fils de chaîne de la sous-bande 210b. Sur les figures 5E à 5H, des couches C"₁₀ et C"₂₀ correspondant respectivement à une portion des fils de chaîne des deux couches de fils de chaîne C₁₀ et C₂₀ et destinées à former la portion en forme d'arche 220 sont liées entre elles par les fils de trame T₁₀ et T₂₀ tandis que les couches C'₁₀ et C'₂₀ correspondant aux fils de chaîne restant des trois couches de fils de chaîne C₁₀ et C₂₀ ne sont pas tissés. Les trois couches de fils de chaîne sous-jacentes C₃₀, C₄₀ et C₅₀ sont liées entre elles par les fils de trame T₃₀ et T₄₀. Les plans d'armures des figures 4E à 4H sont répétés sur toute la longueur de la portion 220. Le nombre de fils de trame insérés dans la sous-bande 210a peut être plus important que le nombre de fils de trame insérés dans la sous-bande 210b afin de maintenir une contexture en sens chaîne constante entre ces deux sous-bandes malgré la longueur supérieure des fils de chaîne dans la sous-bande 210a. La contexture en sens chaîne peut être également plus faible (ou lâche) dans la sous-bande 210a par rapport à la contexture en sens chaîne de la sous-bande 210b si l'on insert le même nombre de fils de trame dans les sous-bandes 210a et 210b. Si l'on insert le même nombre de fils de trame dans les sous-bandes 210a et 210b, le pas entre deux fils de trame adjacents dans le sens chaîne dans la bande 210a peut être réduit en insérant des fils de trame ayant un titre plus important que les fils de trame insérés dans la sous bande 210b.

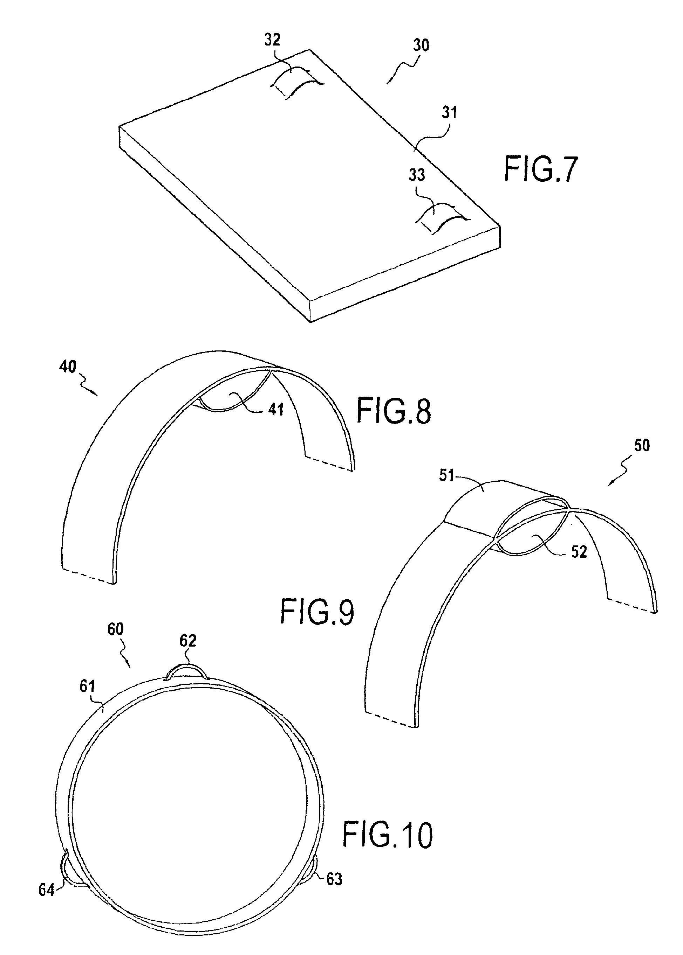

L'invention n'est pas limitée à la formation d'une pièce de révolution comprenant un seul élément en forme d'arche. A titres d'exemples non limitatifs, les figures 6 à 10 montrent d'autres types de pièces qui peuvent être réalisées conformément à l'invention. La figure 6 montre un carter 20 de moteur aéronautique qui comprend une virole 21 sur laquelle sont formées trois chapes de suspensions adjacentes 22, 23 et 24 dans le sens de la largeur de la virole. La figure 10 montre un carter 60 de moteur aéronautique qui comprend une virole 61 sur laquelle sont formées trois chapes de suspensions 62, 63 et 44 réparties sur la circonférence de la virole. Dans ces cas, lors de la réalisation de la structure fibreuse selon l'invention, on forme trois portions en forme d'arche de la même façon que celle décrite ci-avant pour la réalisation des portions 120 et 220, ces trois portions étant réalisées en utilisant des fils de chaîne adjacents dans le sens trame de l'ébauche fibreuse, la longueur des fils de chaîne de ces trois portions étant bien entendu supérieure à celle des fils de chaîne des couches de fils de chaîne sous-jacentes ainsi que des fils de chaîne situées entre deux portions ou à l'extérieure de celles-ci dans le sens trame.

La figure 7 représente une porte 30 comprenant un panneau 31 muni de deux charnières 32 et 33. Dans ce cas, lors de la réalisation de la structure fibreuse selon l'invention, on forme deux portions en forme d'arche de la même façon que celle décrite ci-avant pour la réalisation des portions 120 et 220, ces deux portions étant réalisées en utilisant des fils de chaîne adjacents dans le sens trame de l'ébauche fibreuse, les fils de chaîne utilisés pour chacune de ces deux portions étant respectivement situés au voisinage d'une bord de l'ébauche dans le sens trame. La longueur des fils de chaîne de ces deux portions est bien entendu supérieure à celle des fils de chaîne des couches de fils de chaîne sous-jacentes ainsi que des fils de chaîne situées entre les deux portions ou à l'extérieure de celles-ci dans le sens trame.

La figure 8 illustre une portion de virole 40 comportant une cloison interne 41 qui peut être utilisée comme passe-fils ou comme conduit. Cette pièce est obtenue en réalisant une structure fibreuse comprenant, sur toute la largeur dans le sens trame de l'ébauche fibreuse, une portion en forme d'arche formée de la même façon que celle décrite ci-avant pour la réalisation des portions 120 et 220, l'ébauche fibreuse étant simplement densifiée en étant maintenue suivant une courbure inversée par rapport aux ébauches 100 et 200.

La figure 9 représente une portion de virole 50 comportant une cloison externe 51 disposée sur une face externe 50a de la portion de virole et une cloison interne 52 disposée sur une face interne 50b de la portion de virole 50. Dans ce cas, la structure fibreuse à partir de laquelle est formé le renfort fibreux de la portion de virole 50 comprend une première portion en forme d'arche s'étendant au-dessus d'une des faces de la structure fibreuse et une deuxième portion en forme d'arche qui s'étend au dessus de l'autre face de la structure fibreuse. Les première et deuxième portions en forme d'arche sont respectivement formées avec des fils de chaîne d'au moins deux couches adjacentes de fils de chaîne présentes sur chacune des faces de la structure fibreuse. Ces première et deuxième portions en forme d'arche sont réalisées de la même façon que celle décrite ci-avant pour la réalisation des portions 120 et 220, à savoir avec des fils de chaîne continus avec le reste de la structure mais ayant une longueur supérieure aux fils de chaîne d'au moins les deux couches de fils de chaîne sous-jacentes de la structure, les fils de chaîne de chaque portion en forme d'arche étant déliés des autres fils de chaîne de la structure fibreuse.

Conformément à l'invention, le renfort fibreux des chapes de suspension 22 à 24, des charnières 32 et 33, de la cloison interne 41 ainsi que des cloisons interne et externe 51 et 52 sont tous formées avec des fils de chaîne continus avec le renfort fibreux du reste de la structure, à savoir le renfort fibreux respectivement de la virole 21, du panneau 31, de la portion de virole 40 et de la portion de virole 50.

La forme et les dimensions des pièces en matériau composite réalisées avec la structure fibreuse de l'invention peuvent être variées et ne pas se limiter notamment à des pièces en forme de virole ou de panneau mais à tout autre type de formes sur lesquelles une ou plusieurs parties en forme d'arche sont à réaliser.

## Revendications

1. Pièce en matériau composite comprenant un renfort fibreux densifié par une matrice, la pièce comportant au moins un élément en forme d'arche, ledit renfort étant constitué par une structure fibreuse (100) de renfort de pièce (10) en matériau composite, ladite structure étant tissée en une seule pièce par tissage multicouche entre une pluralité de couches de fils de chaîne (101) disposées de façon adjacente entre deux faces de ladite structure et une pluralité de couches de fils de trame (102),
**caractérisée en ce que** la structure fibreuse (100) comprend au moins une portion en forme d'arche (120) s'étendant au-dessus d'une des faces de ladite structure fibreuse (100), la portion en forme d'arche (120) comprenant au moins une partie des fils de chaîne (101) continus d'au moins deux couches adjacentes de fils de chaîne présentes sur une des faces de la structure (100), les fils de chaîne de ladite portion en forme d'arche (120) ayant une longueur supérieure aux fils de chaîne d'au moins les deux couches de fils de chaîne sous-jacentes de ladite structure (100) et **en ce que** lesdits fils de chaîne de ladite portion en forme d'arche sont déliés des autres fils de chaîne de la structure fibreuse (100).

2. Pièce selon la revendication 1, **caractérisée en ce que** la structure fibreuse comprend plusieurs portions en forme d'arche disposées de façon adjacente dans le sens trame.

3. Pièce selon la revendication 1 ou 2, **caractérisée en ce que** la structure fibreuse comprend plusieurs portions en forme d'arche décalées les une des autres dans le sens chaîne.

4. Pièce selon l'une quelconque des revendications 1 à 3, **caractérisée en ce que** la structure fibreuse comprend plusieurs portions en forme d'arche disposées sur les deux faces de ladite structure fibreuse.

5. Pièce selon l'une quelconque des revendications 1 à 4, **caractérisée en ce que** la structure fibreuse présente une forme de bande (110) s'étendant suivant une longueur déterminée en sens chaîne et présentant une largeur déterminée en sens trame et **en ce que** chaque portion en forme d'arche (120) s'étend sur une longueur en sens trame inférieure à la longueur de ladite structure et présente une largeur en sens trame inférieure à la largeur de ladite structure.

6. Pièce selon l'une quelconque des revendications 1 à 5, **caractérisée en ce que** chaque portion en forme d'arche (120) présente une contexture en sens chaîne sensiblement identique à celle de la portion de ladite structure fibreuse (110b) située en dessous de ladite portion en forme d'arche (120).

7. Pièce selon l'une quelconque des revendications 1 à 5, **caractérisée en ce que** chaque portion en forme d'arche (120) présente une contexture en sens chaîne plus faible que celle de la portion de ladite structure fibreuse (110b) située en dessous de ladite portion en forme d'arche (120).

8. Pièce selon l'une quelconque des revendications 1 à 5, **caractérisée en ce que** chaque portion en forme d'arche comprend des fils de trame ayant un titre plus important que les fils de trames de la portion de ladite structure fibreuse située en dessous de ladite portion en forme d'arche.

9. Pièce selon l'une quelconque des revendications 1 à 8, **caractérisée en ce qu'**elle constitue un carter (10) de moteur aéronautique comprenant au moins une chape de suspension (12).

10. Turbopropulseur comprenant un carter moteur selon la revendication 9.

11. Aéronef équipé d'au moins un turbopropulseur selon la revendication 10.

## Patentansprüche

1. Verbundwerkstoffteil mit einer durch eine Matrix verdichteten Faserverstärkung, wobei das Teil wenigstens ein bogenförmiges Element umfasst, wobei die Verstärkung durch eine Faserstruktur (100) zur Verstärkung des Teils (10) aus Verbundwerkstoff gebildet ist, wobei die Struktur durch Mehrlagenweben zwischen einer Vielzahl von Kettfadenlagen (101), die zwischen zwei Seiten der Struktur benachbart angeordnet sind, und einer Vielzahl von Schussfadenlagen (102) einstückig gewebt ist,
**dadurch gekennzeichnet, dass** die Faserstruktur (100) wenigstens einen bogenförmigen Abschnitt (120), der sich oberhalb von einer der Seiten der Faserstruktur (100) erstreckt, umfasst, wobei der bogenförmige Abschnitt (120) wenigstens einen Teil der Endloskettfäden (101) von wenigstens zwei benachbarten Kettfadenlagen, die auf einer der Seiten der Struktur (100) vorhanden sind, umfasst, wobei die Kettfäden des bogenförmigen Abschnitts (120) eine größere Länge als die Kettfäden wenigstens der beiden darunter liegenden Kettfadenlagen der Struktur (100) aufweisen, und dass die Kettfäden des bogenförmigen Abschnitts von den anderen Kettfäden der Faserstruktur (100) gelöst sind.

2. Teil nach Anspruch 1, **dadurch gekennzeichnet, dass** die Faserstruktur mehrere bogenförmige Abschnitte, die in Schussrichtung benachbart angeordnet sind, umfasst.

3. Teil nach Anspruch 1 oder 2, **dadurch gekennzeichnet, dass** die Faserstruktur mehrere bogenförmige Abschnitte, die in Kettrichtung zueinander versetzt sind, umfasst.

4. Teil nach einem der Ansprüche 1 bis 3, **dadurch gekennzeichnet, dass** die Faserstruktur mehrere bogenförmige Abschnitte, die auf den beiden Seiten der Faserstruktur angeordnet sind, umfasst.

5. Teil nach einem der Ansprüche 1 bis 4, **dadurch gekennzeichnet, dass** die Faserstruktur eine Bahnform (110) aufweist, die sich in einer bestimmten Länge in Kettrichtung erstreckt und eine bestimmte Breite in Schussrichtung aufweist, und dass jeder bogenförmige Abschnitt (120) sich über eine Länge in Schussrichtung erstreckt, die kleiner als die Länge der Struktur ist, und eine Breite in Schussrichtung aufweist, die kleiner als die Breite der Struktur ist.

6. Teil nach einem der Ansprüche 1 bis 5, **dadurch gekennzeichnet, dass** jeder bogenförmige Abschnitt (120) eine Fadendichte in Kettrichtung aufweist, die mit derjenigen des unterhalb des bogenförmigen Abschnitts (120) gelegenen Abschnitts der Faserstruktur (110b) im Wesentlichen identisch ist.

7. Teil nach einem der Ansprüche 1 bis 5, **dadurch gekennzeichnet, dass** jeder bogenförmige Abschnitt (120) eine Fadendichte in Kettrichtung aufweist, die geringer als diejenige des unterhalb des bogenförmigen Abschnitts (120) gelegenen Abschnitts der Faserstruktur (110b) ist.

8. Teil nach einem der Ansprüche 1 bis 5, **dadurch gekennzeichnet, dass** jeder bogenförmige Abschnitt Schussfäden umfasst, die eine größere Nummer als die Schussfäden des unterhalb des bogenförmigen Abschnitts gelegenen Abschnitts der Faserstruktur haben.

9. Teil nach einem der Ansprüche 1 bis 8, **dadurch gekennzeichnet, dass** es ein Gehäuse (10) eines Flugtriebwerks mit wenigstens einem Aufhängungsbügel (12) bildet.

10. Turboprop-Triebwerk, umfassend ein Triebwerkgehäuse nach Anspruch 9.

11. Flugzeug, das mit wenigstens einem Turboprop-Triebwerk nach Anspruch 10 ausgestattet ist.

## Claims

1. A composite material part comprising fiber reinforcement densified by a matrix, the part having at least one element of arcuate shape, said reinforcement being constituted by a reinforcing fiber structure (100) for the composite material part (10), said structure being woven as a single piece by multilayer weaving between a plurality of layers of weft yarns (102) and a plurality of layers of warp yarns (101) arranged in adjacent manner between two faces of said structure, the composite material part being **characterized in that** the fiber structure (100) has at least one arcuate portion (120) extending over one of the faces of said fiber structure (100), the arcuate portion (120) comprising at least some of the warp yarns (101) continuous with at least two adjacent warp yarn layers present on one of the faces of the structure (100), the warp yarns of said arcuate portion (120) being of a length that is longer than the warp yarns of at least two underlying warp yarn layers of said structure (100), and **in that** said warp yarns of said arcuate portion are not interlinked with other warp yarns of the fiber structure (100).

2. A part according to claim 1, **characterized in that** the fiber structure has a plurality of arcuate portions arranged in adjacent manner in the weft direction.

3. A part according to claim 1 or claim 2, **characterized in that** the fiber structure has a plurality of arcuate portions offset from one another in the warp direction.

4. A part according to any one of claims 1 to 3, **characterized in that** the fiber structure has a plurality of arcuate portions arranged on the two faces of said fiber structure.

5. A part according to any one of claims 1 to 4, **characterized in that** the fiber structure is in the form of a strip (110) extending over a determined length in the warp direction and presenting a determined width in the weft direction, and **in that** each arcuate portion (120) extends over a length in the warp direction that is less than the length of said structure and presents a width in the weft direction that is less than the width of said structure.

6. A part according to any one of claims 1 to 5, **characterized in that** each arcuate portion (120) presents a thread count in the warp direction that is substantially identical to the thread count of the portion of said fiber structure (110b) that is situated under said arcuate portion (120).

7. A part according to any one of claims 1 to 5, **characterized in that** each arcuate portion (120) presents a thread count in the warp direction that is less than that of the portion of said fiber structure (110b) situated under said arcuate portion (120).

8. A part according to any one of claims 1 to 5, **characterized in that** each arcuate portion has weft yarns of weight that is greater than the weight of the weft yarns of a portion of said fiber structure situated under said arcuate portion.

9. A part according to any one of claims 1 to 8, **characterized in that** it constitutes an aeroengine casing (10) having at least one suspension yoke (12).

10. A turboprop having an engine casing according to claim 9.

11. An aircraft having at least one turboprop according to claim 10.
